# EUROPEAN PATENT APPLICATION

(11) **EP 4 557 498 A1**
(43) Date of publication of application: **21.05.2025**
(21) Application number: 24759770.1
(22) Date of filing: 23.02.2024
(51) Int. Cl.: H01M 50/536

(54) **BATTERY**

(30) Priority: 23.02.2023 CN 202320300554 U
(71) Applicant: SVOLT Energy Technology Co., Ltd., Changzhou, Jiangsu 213200 (CN)
(72) Inventor: YUAN, Yue, hangzhou, Jiangsu 213200 (CN)
(74) Representative: M. Zardi & Co S.A.
(86) International application number: PCT/CN2024/078332
(87) International publication number: WO 2024/175096

(57) **Abstract**

A battery (1), comprising: a housing (10) provided with a first side and a second side arranged opposite to each other, the second side of the housing (10) being open to form an opening (102), a positive terminal post (11) arranged on the first side of the housing (10), a negative cover plate (12) covering the opening (102), and an electrode group (13) arranged inside the housing (10) and configured to be mounted into the housing (10) through the opening (102), the positive terminal post (11) and the negative cover plate (12) being both electrically connected to the electrode group (13), wherein the positive terminal post (11) comprises a terminal post body (110) and a connecting portion (111), the connecting portion (111) is connected at a peripheral side of the terminal post body (110) and surrounds the terminal post body (110), the connecting portion (111) is directly welded to the electrode group (13), and the terminal post is an integrally formed member.

## Description

### CROSS REFERENCE TO RELATED APPLICATIONS

The present application is proposed based on the Chinese patent application with an application number of 202320300554.8 and filed on Feb. 23, 2023 and claims the priority of the Chinese patent application, the contents of which are incorporated herein by reference in its entirety.

### TECHNICAL FIELD

The present application relates to the field of batteries, in particular to a battery.

### BACKGROUND

In the related technology, a battery has many parts, and an entire assembly process is more complex with more assembly processes, thereby leading to lower production efficiency.

### SUMMARY OF THE APPLICATION

The present application aims at solving at least one of the above technical problems in the prior art to a certain extent.

To this end, the present application needs to provide a battery. By cancelling a positive connecting piece at a positive terminal and welding a connecting portion of a positive terminal post directly to an electrode group, the positive terminal post is electrically connected to the electrode group, thereby eliminating an assembly process of the positive connecting piece and the terminal post, reducing the number of parts, reducing the assembly process, and improving the production efficiency.

The battery according to embodiments of the present application includes: a housing provided with a first side and a second side arranged opposite to each other, the second side of the housing being open to form an opening; a positive terminal post arranged on the first side of the housing; a negative cover plate covering the opening; an electrode group arranged inside the housing and configured to be mounted into the housing through the opening, the positive terminal post and the negative cover plate being both electrically connected to the electrode group, wherein the positive terminal post includes a terminal post body and a connecting portion, the connecting portion is connected at a peripheral side of the terminal post body and surrounds the terminal post body, the connecting portion is directly welded to the electrode group, and the terminal post is an integrally formed member.

According to the battery of the embodiments of the present application, by cancelling the positive connecting piece at the positive terminal, the connecting portion of the positive terminal post is directly welded to the electrode group, so as to achieve electrical connection between the positive terminal post and the electrode group, reduce the welding process between the positive connecting piece and the terminal post and between the positive connecting piece and the electrode group, reduce the number of parts and the welding process, and simplify the assembly process.

According to an example of the present application, the connecting portion is provided with a plurality of reinforcing convex ribs spaced apart along a circumferential direction of the terminal post body and connected to the terminal post body, a part of the connecting portion between every two adjacent reinforcing convex ribs is a welding zone, the welding zone being directly welded to the electrode group.

According to an example of the present application, the battery further includes a sealing insulating member, wherein the sealing insulating member includes a first sealing insulating section, a second sealing insulating section and a third sealing insulating section, a mounting hole is formed in the first side of the housing, the positive terminal post penetrates through the mounting hole, the first sealing insulating section is located between an inner circumferential wall of the mounting hole and the positive terminal post, the second sealing insulating section is connected to a side, adjacent to the electrode group, of the first sealing insulating section, the second sealing insulating section is located between an inner wall of the housing and the positive terminal post, the third sealing insulating section is connected to an opposite side, away from the electrode group, of the first sealing insulating section, the third sealing insulating section is located between an outer wall of the housing and the positive terminal post, and the sealing insulating member is an integrally formed member.

According to an example of the present application, the positive terminal post includes a terminal post body, a connecting portion and an extension portion, the connecting portion is connected at a peripheral side of the terminal post body and surrounds the terminal post body, the extension portion is connected to a peripheral side of the connecting portion and surrounds the connecting portion, the connecting portion is connected to the electrode group, an outer circumferential surface of the extension portion is formed with a position-limiting groove, the first sealing insulating section is located in the position-limiting groove, and at least a portion of the second sealing insulating section and at least a portion of the third sealing insulating section are located in the position-limiting groove.

According to an example of the present application, the negative cover plate is directly welded to the electrode group.

According to an example of the present application, a first rolled sealing section is formed along an inner circumferential edge of the opening, a second rolled sealing section is formed along an outer circumferential edge of the negative cover plate, and the first rolled sealing section is snap-fitted with the second rolled sealing section.

According to an example of the present application, a sealing member is arranged between the first rolled sealing section and the second rolled sealing section.

According to an example of the present application, the first rolled sealing section is formed as a position-limiting recessed zone extending along a circumferential direction of the opening, a notch of the position-limiting recessed zone faces towards the first side of the housing, the second rolled sealing section is formed as a position-limiting protrusion extending along a circumferential direction of the negative cover plate, the second rolled sealing section is configured to be snap-fitted into the first rolled sealing section through the notch, and an outer circumferential surface of the second rolled sealing section abuts against an inner circumferential surface of the housing.

According to an example of the present application, the second rolled sealing section is formed by bending an outer edge portion of the negative cover plate, a sealing member is arranged between the first rolled sealing section and the second rolled sealing section, and the sealing member is engaged with the second rolled sealing section.

According to an example of the present application, the second rolled sealing section includes a first ribbed section, a second ribbed section and a third ribbed section arranged outwards in sequence along a radial outward direction of the negative cover plate, the first ribbed section is connected to the second ribbed section via a fourth ribbed section, and the second ribbed section is connected to the third ribbed section via a fifth ribbed section, and the third ribbed section abuts against an inner circumferential surface of the housing;
wherein a first engaging groove is defined between the first ribbed section and the first rolled sealing section, a second engaging groove is formed by the second ribbed section, the third ribbed section, and the fifth ribbed section, the first ribbed section, the second ribbed section, and the fourth ribbed section together form a first engaging protrusion, the sealing member is formed with a second engaging protrusion and a third engaging protrusion arranged in sequence along a radial direction of the housing, a third engaging groove is defined between the second engaging protrusion and the third engaging protrusion, the first engaging protrusion is accommodated in the third engaging groove, the second engaging protrusion is accommodated in the first engaging groove, and the third engaging protrusion is accommodated in the second engaging groove.

Additional aspects and advantages of the present application will be partially described below, and will partially become apparent from the following description, or will be learned from practice of the present application.

### BRIEF DESCRIPTION OF THE DRAWINGS

Fig. 1 is a sectional view of a battery according to some embodiments of the present application;
Fig. 2 is an enlarged view at C in Fig. 1;
Fig. 3 is an exploded view of a battery in Fig. 1;
Fig. 4 is a perspective view of a positive terminal post of a battery in Fig. 1;
Fig. 5 is a sectional view of a positive terminal post in Fig. 4;
Fig. 6 is a perspective view of a negative cover plate of a battery in Fig. 1;
Fig. 7 is a sectional view of a negative cover plate of a battery in Fig. 1.

### Reference numerals:

1. battery; 10. housing; 101. mounting hole; 102. opening;
11. positive terminal post; 110. terminal post body; 111. connecting portion; 112. extension portion; 113. reinforcing convex rib; 114. position-limiting groove; 115. welding zone;
12. negative cover plate; 13. electrode group;
14. sealing insulating member; 140. first sealing insulating section; 141. second sealing insulating section; 142. third sealing insulating section;
15. first rolled sealing section; 150. position-limiting recessed zone; 151. notch;
16. second rolled sealing section; 160. first ribbed section; 161. second ribbed section; 162. third ribbed section; 163. fourth ribbed section; 164. fifth ribbed section;
17. sealing member; 18. first engaging groove; 19. second engaging groove; 20. third engaging groove; 21. first engaging protrusion; 22. second engaging protrusion; 23. third engaging protrusion;
24. convex hull; 240. explosion-proof structure;
25. concave portion; 250. filling port;
26. sealing nail; 27. sealing cover plate.

### DETAILED DESCRIPTION

Embodiments of the present application are described in detail below, and examples of the embodiments are shown in the accompanying drawings, wherein the same or similar reference numerals throughout denote the same or similar elements or elements having the same or similar functions. The embodiments described below with reference to the accompanying drawings are exemplary and are merely used for explaining the present application, rather than being construed as a limitation of the present application.

The following disclosure provides a number of different embodiments or examples for implementing different structures of the present application. In order to simplify the disclosure of the present application, the parts and settings of particular examples are described below. Such parts and settings are merely examples and are not intended to limit the present application. In addition, in the present application, reference numbers and/or letters can be repeated in different examples. Such repetition is for purposes of simplicity and clarity and is not in itself indicative of a relationship between the various embodiments and/or settings under discussion. In addition, the present application provides various examples of specific processes and materials, but those skilled in the art may appreciate the applicability of other processes and/or the use of other materials.

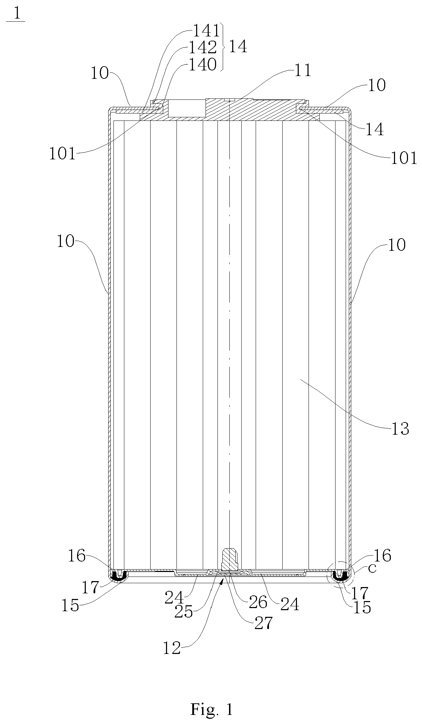

The battery 1 according to an embodiment of the present application is described below with reference to Figs. 1 to 7.

As shown in Figs. 1, 3, and 4, the battery 1 according to an embodiment of the present application includes: a housing 10, a positive terminal post 11, a negative cover plate 12 and an electrode group 13. The housing 10 is provided with a first side and a second side arranged opposite to each other, and the second side of the housing 10 is open to form an opening 102, the positive terminal post 11 is arranged on the first side of the housing 10, and the negative cover plate 12 covers the opening 151102.

The electrode group 13 is arranged inside the housing 10 and is configured to be mounted into the housing 10 through the opening 151102, the positive terminal post 11 and the negative cover plate 12 are both electrically connected to the electrode group 13, wherein the positive terminal post 11 includes a terminal post body 110 and a connecting portion 111, the connecting portion 111 is connected at a peripheral side of the terminal post body 110 and surrounds the terminal post body 110, the connecting portion 111 is directly welded to the electrode group 13, and the terminal post is an integrally formed member. In this arrangement, a positive connecting piece located between the positive terminal post 11 and the electrode group 13 is cancelled, the positive connecting piece can transfer current from the electrode group 13 to the positive terminal post 11, and by welding the connecting portion 111 of the positive terminal post 11 directly to the electrode group 13, the positive terminal post 11 is electrically connected with the electrode group 13, thereby reducing the number of parts, eliminating an assembly process between the positive connecting piece and the electrode group 13, and reducing the assembly process.

Optionally, the battery 1 may be a cylindrical battery 1, for example, the material of the housing 10 may be steel.

As to the battery 1 according to an embodiment of the present application, by cancelling the positive connecting piece at the positive terminal, the connecting portion 111 of the positive terminal post 11 is directly welded to the electrode group 13, so as to achieve electrical connection between the positive terminal post 11 and the electrode group 13, reduce a welding process between the positive connecting piece and the terminal post and between the positive connecting piece and the electrode group 13, and reduce the number of parts and the welding process, and simplify the assembly process.

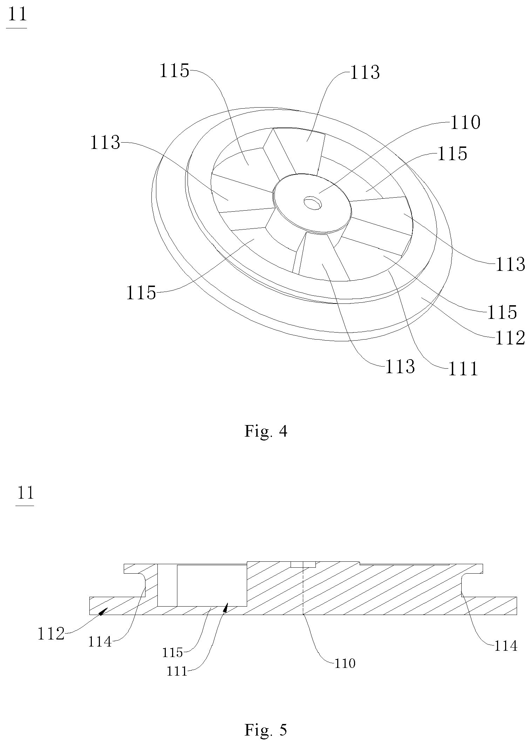

According to some embodiments of the present application, referring to Fig. 4, the connecting portion 111 is provided with a plurality of reinforcing convex ribs 113 spaced apart along a circumferential direction of the terminal post body 110 and connected to the terminal post body 110, thereby enhancing strength of the terminal post in a circumferential direction. A part of the connecting portion 111 located between every two adjacent reinforcing convex ribs 113 is a welding zone 115, and the welding zone 115 is directly welded to the electrode group 13. The reinforcing convex ribs 113 are thicker, and it is inconvenient to penetrate through the reinforcing convex ribs 113 to weld the welding zone 115 to the electrode group 13, and the welding zone 115 is thinner, and it is convenient to penetrate through the welding zone 115 to weld the welding zone 115 directly to the electrode group 13. For example, the welding zone 115 can be directly connected to the electrode group 13 through penetration welding, and the welding speed of penetration welding is faster, micro elements can be welded, such that high-speed welding and high-precision welding can be achieved, and connection between the connecting portion 111 and the electrode group 13 is facilitated with a better welding effect. Optionally, four reinforcing convex ribs 113 are arranged on the connecting portion 111, and the four reinforcing convex ribs 113 are arranged at intervals along the circumferential direction of the terminal post body 110 and are connected to the terminal post body 110, such that the connecting portion 111 also has four welding zones 115, and the welding zones 115 are directly welded to the electrode group 13.

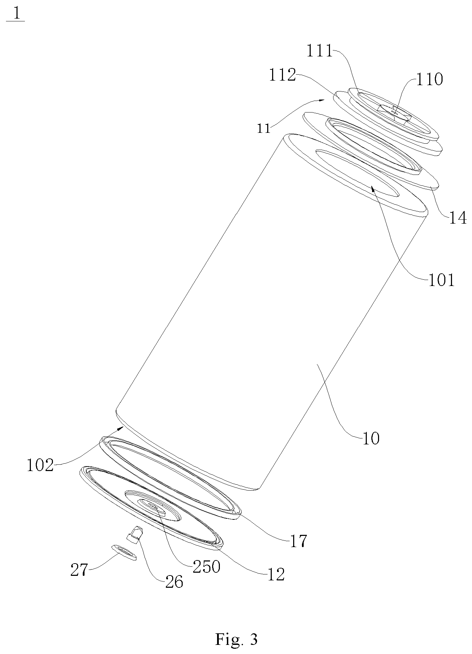

According to some embodiments of the present application, referring to Figs. 1 and 3, the battery 1 further includes a sealing insulating member 14, the sealing insulating member 14 includes a first sealing insulating section 140, a second sealing insulating section 141 and a third sealing insulating section 142, a mounting hole 101 is formed in the first side of the housing 10, the positive terminal post 11 penetrates through the mounting hole 101, the first sealing insulating section 140 is located between an inner circumferential wall of the mounting hole 101 and the positive terminal post 11. The first sealing insulating section 140 can insulate the inner circumferential wall of the mounting hole 101 from the positive terminal post 11, and can seal a gap between the mounting hole 101 and the positive terminal post 11. The second sealing insulating section 141 is connected to the side, adjacent to the electrode group 13, of the first sealing insulating section 140, the second sealing insulating section 141 is located between an inner wall of the housing 10 and the positive terminal post 11, and the second sealing insulating section 141 can insulate the inner wall of the housing 10 from the positive terminal post 11, and can support and protect the housing 10 and the positive terminal post 11, and can seal the gap between an inner wall of the housing 10 and the positive terminal post 11. The third sealing insulating section 142 is connected to an opposite side, away from the electrode group 13, of the first sealing insulating section 140, and the third sealing insulating section 142 is located between the outer wall of the housing 10 and the positive terminal post 11, thereby insulating the outer wall of the housing 10 from the positive terminal post 11, fixing and protecting the positive terminal post 11, and sealing the gap between the outer wall of the housing 10 and the positive terminal post 11.

The sealing insulating member 14 concentrates a function of sealing and a function of insulating into a single part, then conductivity between the housing 10 and the positive terminal post 11 can be prevented when the housing 10 is electrically charged, thereby ensuring that electrical connection between the positive terminal post 11 and the electrode group 13 is not interfered by the housing 10, and preventing short circuit of the battery 1, meanwhile, a gap between the housing 10 and the positive terminal post 11 can be sealed, thereby preventing dust and other foreign objects from entering into the battery 1 and ensuring normal operation of the battery 1.

The sealing insulating member 14 is an integrally formed member, three parts for sealing and insulating are originally arranged between the positive terminal post 11 and the housing 10, and in this arrangement, the above three parts are changed into one part, thereby reducing the number of parts, reducing the assembly process, and improving the production efficiency.

According to some embodiments of the present application, referring to Figs. 4 and 5, the positive terminal post 11 includes a terminal post body 110, a connecting portion 111 and an extension portion 112, the connecting portion 111 is connected at a peripheral side of the terminal post body 110 and surrounds the terminal post body 110, the extension portion 112 is connected to a peripheral side of the connecting portion 111 and surrounds the connecting portion 111, the connecting portion 111 is connected to the electrode group 13, an outer circumferential surface of the extension portion 112 is formed with a position-limiting groove 114, the first sealing insulating section 140 is located in the position-limiting groove 114, and at least a portion of the second sealing insulating section 141 and at least a portion of the third sealing insulating section 142 are located in the position-limiting groove 114. For example, a portion of the second sealing insulating section 141 is located in the position-limiting groove 114; for another example, the second sealing insulating section 141 is completely located in the position-limiting groove 114. For example, a portion of the third sealing insulating section 142 is located in the position-limiting groove 114; and for another example, the third sealing insulating section 142 is completely located in the position-limiting groove 114. In this arrangement, the sealing insulating member 14 can be limited, such that the sealing insulating member 14 can better seal and insulate the housing 10 and the positive terminal post 11.

In some embodiments, in an assembly process, the positive terminal post 11 is assembled with the sealing insulating member 14 to form an assembly member, the assembly member is mounted into the housing 10, and the assembly member is riveted to the mounting hole 101, such that the positive terminal post 11 and the housing 10 can be sealed and insulated. After the electrode group 13 is mounted into the housing 10 through the opening 102, the connecting portion 111 of the positive terminal post 11 is welded to the electrode group 13, so as to achieve electrical connection between the positive terminal post 11 and the electrode group 13. In this arrangement, the number of parts is reduced, the welding process is reduced, the assembly process is simplified, and the production efficiency is improved.

According to some embodiments of the present application, the negative cover plate 12 is directly welded to the electrode group 13. In this arrangement, by cancelling a negative connecting piece between the negative cover plate 12 and the electrode group 13, the negative cover plate 12 is directly welded to the electrode group 13, so as to achieve electrical connection between the negative cover plate 12 and the electrode group 13, reduce the number of parts, eliminate welding connection between the negative connecting piece and the terminal post, simplify the assembly process and improve the production efficiency.

In some embodiments, the negative cover plate 12 can be directly connected to the electrode group 13 through penetration welding, the welding speed of penetration welding is faster, and micro elements can be welded, such that high-speed welding and high-precision welding can be achieved, and connection between the connecting portion 111 and the electrode group 13 is facilitated with a better welding effect.

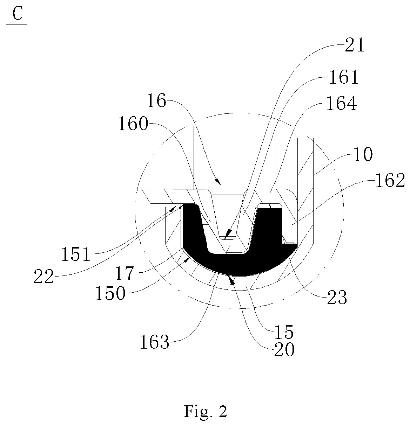

According to some embodiments of the present application, referring to Fig. 2, a first rolled sealing section 15 is formed along an inner circumferential edge of the opening 102, a second rolled sealing section 16 is formed along an outer circumferential edge of the negative cover plate 12, and the first rolled sealing section 15 is snap-fitted with the second rolled sealing section 16. The original welding connection between the negative cover plate 12 and the housing 10 is changed to snap-fitting connection, thereby reducing the welding process, and in this arrangement, mounting is simple, connection is reliable, and disassembly is convenient, thereby simplifying the assembly process and further improving the production efficiency.

According to some embodiments of the present application, referring to Figs. 1 to 3, a sealing member 17 is arranged between the first rolled sealing section 15 and the second rolled sealing section 16. The first rolled sealing section 15 is snap-fitted with the second rolled sealing section 16, and the sealing member 17 can fill a gap between the first rolled sealing section 15 and the second rolled sealing section 16, thereby ensuring tightness between the negative cover plate 12 and the housing 10, and preventing leakage of the electrolyte inside the battery 1.

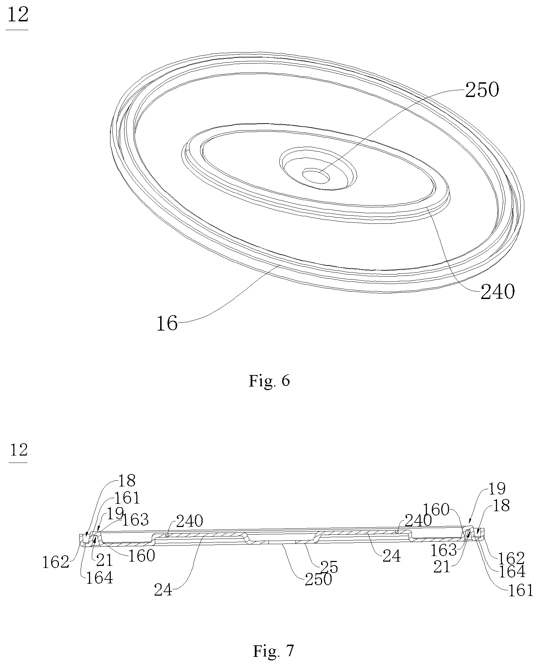

According to some embodiments of the present application, referring to Figs. 2 and 7, the first rolled sealing section 15 is formed as a position-limiting recessed zone 150 extending along a circumferential direction of the opening 102, a notch 151 of the position-limiting recessed zone 150 faces towards the first side of the housing 10, the second rolled sealing section 16 is formed as a position-limiting protrusion extending along a circumferential direction of the negative cover plate 12, the second rolled sealing section 16 is configured to be snap-fitted into the first rolled sealing section 15 through the notch 151. In this arrangement, through coordination between the position-limiting protrusion and the position-limiting recessed zone 150, the first rolled sealing section 15 and the second rolled sealing section 16 are connected more firmly and reliably, and the second rolled sealing section 16 is conveniently snap-fitted into the first rolled sealing section 15, therefore, the mounting is simple, the disassembly is convenient, and the production efficiency can be improved. An outer circumferential surface of the second rolled sealing section 16 abuts against an inner circumferential surface of the housing 10. The negative cover plate 12 is electrically connected to the electrode group 13, and an outer circumferential surface of the second rolled sealing section 16 of the negative cover plate 12 abuts against the inner circumferential surface of the housing 10, so as to achieve conductivity between the negative cover plate 12 and the housing 10.

According to some embodiments of the present application, referring to Fig. 2, the second rolled sealing section 16 is formed by bending an outer edge portion of the negative cover plate 12, a sealing member 17 is arranged between the first rolled sealing section 15 and the second rolled sealing section 16, and the sealing member 17 is engaged with the second rolled sealing section 16. In this arrangement, a gap between the second rolled sealing section 16 and the first rolled sealing section 15 can be fully filled, the sealing effect between the negative cover plate 12 and the housing 10 is better, and leakage of electrolyte inside the battery 1 can be better prevented. Moreover, when the sealing member 17 is engaged with the second rolled sealing section 16, the strength of connection between the first rolled sealing section 15 and the second rolled sealing section 16 can be enhanced, and connection is more stable and reliable.

In some embodiments, in an assembly process, after the sealing member 17 is mounted into the second rolled sealing section 16, and after the electrode group 13 is mounted into the housing 10 from the opening 102 of the housing 10, the negative cover plate 12 assembled with the sealing member 17 covers the opening 102, and the second rolled sealing section 16 and the sealing member 17 are snap-fitted into the first rolled sealing section 15 through the notch 151 of the first rolled sealing section 15. In this arrangement, connection between the negative cover plate 12 and the housing 10 is facilitated, the welding process is reduced, the production efficiency is improved, and tightness between the negative cover plate 12 and the housing 10 can be ensured.

According to some embodiments of the present application, referring to Figs. 2, 6, and 7, the second rolled sealing section 16 includes a first ribbed section 160, a second ribbed section 161 and a third ribbed section 162 arranged outwards in sequence along a radial outward direction of the negative cover plate 12, the first ribbed section 160 is connected to the second ribbed section 161 via a fourth ribbed section 163, and the second ribbed section 161 is connected to the third ribbed section 162 via a fifth ribbed section 164, and the third ribbed section 162 abuts against the inner circumferential surface of the housing 10. In this arrangement, the structure is simple, and the connection is convenient, thereby facilitating production and manufacturing of the second rolled sealing section 16, and improving the production efficiency. The negative cover plate 12 is electrically connected to the electrode group 13, and the third ribbed section 162 abuts against the inner circumferential surface of the housing 10, and conductivity between the negative cover plate 12 and the housing 10 can be achieved.

Wherein a first engaging groove 18 is defined between the first ribbed section 160 and the first rolled sealing section 15, a second engaging groove 19 is formed by the second ribbed section 161, the third ribbed section 162, and the fifth ribbed section 164, the first ribbed section 160, the second ribbed section 161, and the fourth ribbed section 163 together form a first engaging protrusion 21, the sealing member 17 is formed with a second engaging protrusion 22 and a third engaging protrusion 23 arranged in sequence along a radial direction of the housing 10, a third engaging groove 20 is defined between the second engaging protrusion 22 and the third engaging protrusion 23, the first engaging protrusion 21 is accommodated in the third engaging groove 20, the second engaging protrusion 22 is accommodated in the first engaging groove 18, and the third engaging protrusion 23 is accommodated in the second engaging groove 19. In this arrangement, the sealing member 17 is positioned, and the sealing member 17 can better seal the first rolled sealing section 15 and the second rolled sealing section 16, thereby better preventing leakage of electrolyte inside the battery 1. The sealing member 17 is engaged with the second rolled sealing section 16, the second rolled sealing section 16 and the sealing member 17 are snap-fitted with the first rolled sealing section 15, and the first rolled sealing section 15 can further compress the sealing member 17, thereby improving tightness of the first rolled sealing section 15 and the second rolled sealing section 16 by the sealing member 17.

In some embodiments, a convex hull 24 protruding outwards is formed on the negative cover plate 12, the convex hull 24 may be annular, an explosion-proof structure 240 is formed on the convex hull 24, and the explosion-proof structure 240 may be of a scored structure, for example, when the battery 1 is thermally out of control, pressure inside the battery 1 is too high, the explosion-proof structure 240 is fractured, and gas inside the battery 1 is discharged from the fracture of the explosion-proof structure 240 to the outside of the battery 1, therefore, pressure relief can be performed to avoid strong explosions of the battery 1.

Further, the inner circumferential side of the convex hull 24 is defined with a concave portion 25, and the concave portion 25 is formed with a filling port 250, such that the electrolyte can be injected into the interior of the battery 1 through the filling port 250. **In** this arrangement, fracture of the explosion-proof score caused by corrosion by the electrolyte when the explosion-proof structure 240 is contaminated by the electrolyte during liquid injection can be prevented. After liquid injection, a sealing nail 26 is inserted into the filling port 250, and the sealing nail 26 can seal the filling port 250 to prevent leakage of the electrolyte of the battery 1. For example, the material of the sealing nail 26 may be rubber. Finally, the sealing cover plate 27 is welded to the concave portion 25, and the sealing cover plate 27 can seal and limit the sealing nail 26 to a certain extent, thereby preventing the sealing nail 26 from being disengaged from the filling port 250, further sealing the filling port 250, and making the sealing effect of the sealing nail 26 better.

In the description of the present application, it needs to be understood that, the orientation or positional relationship indicated by such terms as "center", "upper", "lower", "vertical", "horizontal", "top", "bottom", "inner", "outer", "axial", "radial" and "circumferential" is merely based on the orientation or positional relationship shown in the accompanying drawings, and is merely used for facilitating description of the present application and simplifying the description, rather than indicating or implying that the devices or elements referred to must have a particular orientation or be constructed and operated in a particular orientation, and therefore cannot be construed as a limitation of the present application.

In addition, the terms "first" and "second" are merely used for descriptive purposes and are not to be understood as indicating or implying relative importance or implicitly specifying the number of technical features indicated. Therefore, features defined with the terms "first", "second" may expressly or impliedly include one or more such features. In the description of the present application, "a plurality of" means two or more, unless otherwise expressly and specifically limited.

In the present application, unless otherwise expressly specified and limited, the terms "mounted", "connected", "connection" and "fixed" should be understood in their broad sense, for example, the connection may be a fixed connection, a detachable connection, or an integral connection; and may be direct connection or may be indirect connection through an intermediate, and it may be communication between two elements or interaction between two elements. For those skilled in the art, specific meanings of the above terms in the present application can be understood according to specific conditions.

In the present application, unless otherwise expressly specified and limited, a first feature being "above" or "below" a second feature can mean that the first feature directly contacts with the second feature, or the first feature indirectly contacts with the second feature through an intermediate. Moreover, the first feature being "above", "on" and "on the upper side of" the second feature can mean that the first feature is just above or obliquely above the second feature, or just represents that a horizontal height of the first feature is greater than that of the second feature. The first feature being "below", "under" and "on the lower side of" the second feature can mean that the first feature is just below or obliquely below the second feature, or merely represents that the horizontal height of the first feature is smaller than that of the second feature.

In the description of the present specification, description of reference terms including "one embodiment", "some embodiments", "examples", "specific examples", or "some examples" means that specific features, structures, materials, or characteristics described in combination with the embodiment or example are included in at least one embodiment or example of the present application. In the present specification, schematic expressions of the above terms do not necessarily refer to the same embodiment or example. Moreover, the described specific features, structures, materials or characteristics can be combined in a proper manner in any one or more embodiments or examples. In addition, without contradicting each other, different embodiments or examples and features of different embodiments or examples described in the present specification can be combined by those skilled in the art.

Although embodiments of the present application have been shown and described, it can be understood by those skilled in the art that various changes, modifications, substitutions and variations can be made to these embodiments without departing from the principles and purposes of the present application, and that the scope of the present application is limited by the claims and their equivalents.

## Claims

1. A battery, comprising:
a housing provided with a first side and a second side arranged opposite to each other, the second side of the housing being open to form an opening;
a positive terminal post arranged on the first side of the housing;
a negative cover plate covering the opening; and
an electrode group arranged inside the housing and configured to be mounted into the housing through the opening, the positive terminal post and the negative cover plate being both electrically connected to the electrode group;
wherein the positive terminal post comprises a terminal post body and a connecting portion, the connecting portion is connected at a peripheral side of the terminal post body and surrounds the terminal post body, the connecting portion is directly welded to the electrode group, and the terminal post is an integrally formed member.

2. The battery according to claim 1, wherein the connecting portion is provided with a plurality of reinforcing convex ribs spaced apart along a circumferential direction of the terminal post body and connected to the terminal post body, a part of the connecting portion located between every two adjacent reinforcing convex ribs is a welding zone, the welding zone being directly welded to the electrode group.

3. The battery according to claim 1, further comprising a sealing insulating member, wherein the sealing insulating member comprises a first sealing insulating section, a second sealing insulating section and a third sealing insulating section, a mounting hole is formed at the first side of the housing, the positive terminal post penetrates through the mounting hole, the first sealing insulating section is located between an inner circumferential wall of the mounting hole and the positive terminal post, the second sealing insulating section is connected to a side, adjacent to the electrode group, of the first sealing insulating section, the second sealing insulating section is located between an inner wall of the housing and the positive terminal post, the third sealing insulating section is connected to an opposite side, away from the electrode group, of the first sealing insulating section, the third sealing insulating section is located between an outer wall of the housing and the positive terminal post, and the sealing insulating member is an integrally formed member.

4. The battery according to claim 3, wherein the positive terminal post comprises a terminal post body, a connecting portion and an extension portion, the connecting portion is connected to a peripheral side of the terminal post body and surrounds the terminal post body, the extension portion is connected to a peripheral side of the connecting portion and surrounds the connecting portion, the connecting portion is connected to the electrode group, an outer circumferential surface of the extension portion is formed with a position-limiting groove, the first sealing insulating section is located in the position-limiting groove, and at least a portion of the second sealing insulating section and at least a portion of the third sealing insulating section are located in the position-limiting groove.

5. The battery according to any one of claims 1 to 4, wherein the negative cover plate is directly welded to the electrode group.

6. The battery according to any one of claims 1 to 5, wherein a first rolled sealing section is formed along an inner circumferential edge of the opening, a second rolled sealing section is formed along an outer circumferential edge of the negative cover plate, and the first rolled sealing section is snap-fitted with the second rolled sealing section.

7. The battery according to claim 6, wherein a sealing member is arranged between the first rolled sealing section and the second rolled sealing section.

8. The battery according to claim 6, wherein the first rolled sealing section is formed as a position-limiting recessed zone extending along a circumferential direction of the opening, a notch of the position-limiting recessed zone faces towards the first side of the housing, the second rolled sealing section is formed as a position-limiting protrusion extending along a circumferential direction of the negative cover plate, the second rolled sealing section is configured to be snap-fitted into the first rolled sealing section through the notch, and an outer circumferential surface of the second rolled sealing section abuts against an inner circumferential surface of the housing.

9. The battery according to claim 8, wherein the second rolled sealing section is formed by bending an outer edge portion of the negative cover plate, a sealing member is arranged between the first rolled sealing section and the second rolled sealing section, and the sealing member is engaged with the second rolled sealing section.

10. The battery according to any one of claims 6 to 9, wherein the second rolled sealing section comprises a first ribbed section, a second ribbed section and a third ribbed section arranged outwards in sequence along a radial outward direction of the negative cover plate, the first ribbed section is connected to the second ribbed section via a fourth ribbed section, and the second ribbed section is connected to the third ribbed section via a fifth ribbed section, and the third ribbed section abuts against an inner circumferential surface of the housing;
wherein a first engaging groove is defined between the first ribbed section and the first rolled sealing section, a second engaging groove is formed by the second ribbed section, the third ribbed section, and the fifth ribbed section, the first ribbed section, the second ribbed section, and the fourth ribbed section together form a first engaging protrusion, the sealing member is formed with a second engaging protrusion and a third engaging protrusion arranged in sequence along a radial direction of the housing, a third engaging groove is defined between the second engaging protrusion and the third engaging protrusion, the first engaging protrusion is accommodated in the third engaging groove, the second engaging protrusion is accommodated in the first engaging groove, and the third engaging protrusion is accommodated in the second engaging groove.
